(19) Europäisches Patentamt
European Patent Office
Office européen des brevets

(11) **EP 4 394 018 B1**

(12) **EUROPEAN PATENT SPECIFICATION**

(45) Date of publication and mention
of the grant of the patent:
**01.10.2025 Bulletin 2025/40**

(21) Application number: **22879855.9**

(22) Date of filing: **31.05.2022**

(51) International Patent Classification (IPC):
*C10G 70/04* (2006.01)   *C10G 70/00* (2006.01)
*C10G 70/06* (2006.01)

(52) Cooperative Patent Classification (CPC):
**C10G 70/00; C10G 70/04; C10G 70/041;
C10G 70/043; C10G 70/06**

(86) International application number:
**PCT/CN2022/096161**

(87) International publication number:
**WO 2023/060906 (20.04.2023 Gazette 2023/16)**

(54) **NOVEL PROCESS OF ABSORPTION AND STABILIZATION UNIT AND COMPREHENSIVE UTILIZATION METHOD OF PRODUCTS THEREFROM**

NEUES VERFAHREN FÜR ABSORPTIONS- UND STABILISIERUNGSEINHEIT UND UMFASSENDES VERWENDUNGSVERFAHREN VON PRODUKTEN DARAUS

NOUVEAU PROCÉDÉ D'UNITÉ D'ABSORPTION ET DE STABILISATION ET PROCÉDÉ D'UTILISATION COMPLET DE PRODUITS EN ÉTANT ISSUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2021 CN 202111193024**

(43) Date of publication of application:
**03.07.2024 Bulletin 2024/27**

(73) Proprietor: **Zhejiang Comy Environment
Technology Co., Ltd
Ningbo, Zhejiang 315048 (CN)**

(72) Inventors:
• **XIN, Benen**
  **Ningbo, Zhejiang 315048 (CN)**
• **YE, Zongjun**
  **Ningbo, Zhejiang 315048 (CN)**
• **HONG, Wei**
  **Ningbo, Zhejiang 315048 (CN)**

(74) Representative: **Qip Patent & Recht
Dr. Kuehn & Partner mbB
Bavariaring 10
80336 München (DE)**

(56) References cited:
**CA-A- 645 372        CN-A- 102 382 680
CN-A- 104 177 214     CN-A- 105 647 583
CN-A- 112 707 786     CN-A- 112 707 787
CN-A- 113 354 501     CN-A- 113 845 939
CN-B- 107 227 172     JP-A- 2007 222 847
US-A1- 2017 321 132**

## Description

### TECHNICAL FIELD

The present disclosure relates to the technical field of petroleum refining, and more particularly, to a novel process of an absorption-stabilization unit and a comprehensive utilization method of products therefrom.

### BACKGROUND

The absorption-stabilization unit is a post-treatment process in the catalytic cracking units within the petroleum refining industry. It is used to separate the rich gas and crude gasoline from the fractionator overhead gas separation tank into dry gas ($C_2$ and lighter), liquefied gas ($C_3$-$C_4$), and stabilized gasoline with qualified vapor pressure through absorption and fractionation principles. The equipment and process optimization of the absorption-stabilization unit plays a very important role in energy saving and efficiency enhancement for catalytic cracking.

In the chemical industry, the demand for propylene in the polypropylene sector is increasing year by year. The supply of propylene monomer cannot meet the demand, prompting research into how to comprehensively utilize the rich gas and crude gasoline from catalytic cracking units to maximize the production of high-value chemical products. On the other hand, with the increasing pressure for energy conservation and emission reduction, how to reduce energy consumption has also become a focus of attention.

With an increasing number of PDH (Propane Dehydrogenation) units being constructed domestically, and given the constraints on propane raw materials and technology, blindly investing in the construction of PDH units poses a great risk. To alleviate the constraints on propane raw materials and the risk level of PDH units, research into how to comprehensively utilize the rich gas and crude gasoline from catalytic cracking units is being prompted.

Document CN 107 227 172 B relates to a method for lowering the energy consumption of an absorption and stabilization system, including separating a rich gas and a crude gasoline from products of catalytic cracking units.

Document US 2017/321132 A1 relates to a catalytic cracking fractionation and absorption-stabilization system, and energy saving method thereof.

Document CA 645 372 A relates to a method for the recovery of gasoline and lighter hydrocarbons from catalytically cracked oils.

### SUMMARY

In light of the shortcomings of the existing technology, the present disclosure provides a novel process of an absorption-stabilization unit and a comprehensive utilization method of the products therefrom, which significantly reduces the energy consumption of the system and allows for the comprehensive utilization of rich gas and crude gasoline from the catalytic cracking unit after absorption-stabilization, thereby maximizing the production of high-value chemical products.

To achieve these goals, the technical solution provided by the present disclosure is as follows:

A novel process of an absorption-stabilization unit, which includes the following steps of:

S1 performing a primary compression of a rich gas: compressing the rich gas from a catalytic fractionation unit using a first compressor to a pressure of 0.6±0.2MPa, wherein the compressed rich gas is directly fed into a de-heavy tower for separation by rectification; condensing the overhead fraction of de-heavy tower and subjected it to a gas-liquid separation inside a first reflux tank, obtaining a liquid phase mainly containing $C_3$ and $C_4$, and a gas phase mainly containing $C_3$, wherein the liquid phase mainly containing $C_3$ and $C_4$ is partially refluxed, and partially discharged to a tank farm or a $C_3$ removal tower;

S2 performing a secondary compression of the rich gas: introducing the gas phase mainly containing $C_3$ from the top of the first reflux tank to an inlet of a second compressor, where it is compressed to 1.4±0.3MPa by the second compressor; after the secondary compression, the gas phase is condensed and subjected to a gas-liquid separation inside a second reflux tank, with the separated liquid phase being discharged to a $C_3$ removal tower, and the gas phase being fed to the bottom of an absorption tower;

S3 performing an absorption operation of dry gases: injecting the crude gasoline from the catalytic fractionation unit into the top of the absorption tower, where the crude gasoline is contacted with the gas phase materials from the bottom of the absorption tower, wherein the crude gasoline absorbs $C_3$ and $C_4$ components from the gas phase materials to form a rich-absorption oil, while the unabsorbed components, i.e., dry gases, are drawn off from the top of the absorption tower;

S4 performing a gasoline stabilization operation: feeding materials from the bottom of the de-heavy tower and the rich-absorption oil from the bottom of the absorption tower respectively into a stabilization tower, wherein a liquefied gas fraction is drawn off from the top of the stabilization tower, and a gasoline fraction is drawn off from the bottom of stabilization tower.

In a further embodiment of the technical solution, an operating pressure of the de-heavy tower is $0.6\pm0.2$MPa, a temperature at the bottom of the tower is between 60 to 180°C, and the temperature at the top of the tower is between 40 to 70°C.

Another aspect of the present disclosure is to provide a comprehensive utilization method of the products of the absorption-stabilization unit, which includes the steps of the process of the absorption-stabilization unit as described above; it also includes the following steps of:

S3-1: transporting dry gases with a high ethylene content from the top of the absorption tower sequentially to a heat exchanger and a heater for heating, and then introducing the dry gases into a fixed-bed reactor, wherein the catalyst loaded in the fixed bed reactor is one or a combination of ZSM5, ZSM35, or MCM series of molecular sieves, and wherein the olefins in the dry gases are converted into olefins mainly containing $C_4$ to $C_8$ within the fixed-bed reactor, and the olefin products are fed to a first fluidized bed reactor;

S4-1: pumping the gasoline fraction from the bottom of the stabilization tower to the first fluidized bed reactor, wherein the olefins in the gasoline fraction and the olefin products from step S3-1 are cracked within the first fluidized bed reactor; the catalyst loaded in the first fluidized bed reactor is one or a combination of ZSM5, ZSM35, SAPO, or MCM series of molecular sieves; the cracked products are cooled via heat exchange before being entered into a three-phase separator; the gas phase components mainly containing $C_3$ and $C_4$ are drawn off from the top of the three-phase separator and merged with the rich gas from the catalytic fractionation unit, then returned to the de-heavy tower through the first compressor; an uncracked gasoline is drawn off from the bottom of the three-phase separator, and the uncracked gasoline is rectified and subsequently discharged to a tank farm, wherein the aromatics are further purified through a solvent extraction process to obtain monomers such as benzene, toluene, and xylene;

S4-2: pumping the liquefied gas from the top of the stabilization tower into the $C_3$ removal tower, wherein the $C_3$ gas phase is drawn off from the top of the $C_3$ removal tower and a $C_4$ fraction is drawn off from the bottom of the $C_3$ removal tower; the $C_3$ gas phase is pumped into a $C_2$ removal tower after being condense, wherein the $C_2$ fraction is drawn off from the top of the C2 removal tower, mixed with the dry gas, and then fed into the S3-1 fixed-bed reactor; a C3 liquid phase, namely a mixture of propane and propylene, is drawn off from the bottom of the C2 removal tower; the $C_3$ liquid phase is divided into two streams, wherein one is fed to a high-pressure propylene rectification tower and the other fed to a first low-pressure propylene rectification tower, or, the C3 liquid phase is divided into three streams fed respectively to a high-pressure propylene rectification tower, a first low-pressure propylene rectification tower, and a second low-pressure propylene rectification tower, with the products of each tower's rectification operation being high-purity propane and propylene; the temperature at the top of the high-pressure propylene rectification tower is 3 to 15°C higher than the temperature at the bottom of the first low-pressure propylene rectification tower; the temperature at the top of the first low-pressure propylene rectification tower is 3 to 15°C higher than the temperature at the bottom of the second low-pressure propylene rectification tower; the operating pressure of the high-pressure propylene rectification tower is $2.6\pm0.6$ MPa, the temperature at the bottom of the tower is 60 to 100°C, and the temperature at the top of the tower is 55 to 80°C; the operating pressure of the first low-pressure propylene rectification tower is $1.6\pm0.4$ MPa, the temperature at the bottom of the tower is 50 to 75°C, and the temperature at the top of the tower is 35 to 60°C; the operating pressure of the second low-pressure propylene rectification tower is $0.6\pm0.3$ MPa, the temperature at the bottom of the tower is 20 to 45°C, and the temperature at the top of the tower is 5 to 25°C;

S4-3: pumping the $C_4$ fraction from the bottom of the $C_3$ removal tower into a $C_4$ reforming unit, which is equipped with a pretreatment reactor and a catalytic rectification tower; the catalyst filled in the pretreatment reactor consists of a combination of one or several types from the ZSM5, ZSM35, or MCM series of molecular sieves; after the $C_4$ mixture is processed sequentially through the pretreatment reactor and the catalytic rectification tower, butane is drawn off from the top of the catalytic rectification tower, and butene reformation products are drawn off from the bottom of the catalytic rectification tower, wherein the butene reformation products are subsequently fed to a second fluidized bed reactor for further cracking into gas phase components mainly containing $C_3$ and $C_4$, and wherein the second fluidized bed reactor is filled with a catalyst that is a combination of one or several types from the ZSM5, ZSM35, SAPO, or MCM series of molecular sieves, and the gas phase component is also merged with the rich gas from the catalytic fractionation unit and returned to the de-heavy tower through the first compressor.

In further technical solutions, the reaction temperature of the fixed-bed reactor is 300 to 500°C, the reaction pressure is 0.3 to 3.0 MPa, and the space velocity is 0.1 to 10 $h^{-1}$. Additionally, the fixed-bed reactor operates under gas-phase conditions, with an olefin conversion rate greater than 85m%. The main reactions inside the fixed-bed reactor are represented by Formula 1 or Formula 2 as shown:

$$NC_M^= \; \rightarrow \; C_K^= \quad \text{Formula 1;}$$

where N=2, 3, or 4; M=2 or 3; K=N*M;

$$AC_2^= + BC_3^= \; \rightarrow \; C_L^= \quad \text{Formula 2;}$$

where A=1, 2, or 3; B=1, 2, or 3;
A+B≤4; L=A*2+B*3.

In further technical solutions, the reaction temperature of the first fluidized bed reactor is 350 to 650°C, the reaction pressure is 0.05 to 1.0 MPa, and the space velocity is 1 to 30 h$^{-1}$. The reaction temperature of the second fluidized bed reactor is 300 to 550°C, the reaction pressure is 0.01 to 1.0 MPa, and the space velocity is 10 to 50 h$^{-1}$. The cracking reactions in the first and second fluidized bed reactors exhibit significant selectivity, namely, selectivity 1: the yield of dry gas in the cracked products does not exceed 0.5%; selectivity 2: high yield of propane and butane, low yield of propylene and butylene, in which case one of the reactors is filled with ZSM35 catalyst, while the other is filled with a combination of ZSM35, MCM, and SAPO series of molecular sieves; selectivity 3: high yield of propylene and butylene, low yield of propane and butane, in which case one of the reactors is filled with ZSM5 catalyst, while the other is filled with a combination of ZSM5, SAPO, or MCM series of molecular sieves. The main cracking reactions are as shown in Formulas 3-1 and 3-2:

$$C_K^= \; \text{and/or} \; C_L^= \; \rightarrow \; C_3^= + C_4^= \quad \text{Formula 3-1.}$$

$$C_K^= \; \text{and/or} \; C_L^= \; \rightarrow \; C_3^0 + C_4^0 \quad \text{Formula 3-2.}$$

In further technical solutions, the ratio of the feed flow rate of the $C_3$ liquid phase in the high-pressure propylene rectification tower to the feed flow rate of the $C_3$ liquid phase in the low-pressure propylene rectification tower is 0.5 to 2.0:1.

Moreover, in further technical solutions, the high-pressure propylene rectification tower and the low-pressure propylene rectification tower operate in a thermal-coupling manner, i.e., the oil gas from the top of the high-pressure propylene rectification tower serves as the heat source for the reboiler of the first low-pressure propylene rectification tower. Compared to conventional single-tower propylene rectification, this configuration achieves an energy saving effect of no less than 40%. In even further technical solutions, a three-tower thermal -coupling operation is conducted involving the high-pressure propylene rectification tower, the first low-pressure propylene rectification tower, and the second low-pressure propylene rectification tower (not shown in the diagram), wherein the oil gas from the top of the high-pressure propylene rectification tower serves as the heat source for the reboiler of the first low-pressure propylene rectification tower, and the oil gas from the top of the first low-pressure propylene rectification tower serves as the heat source for the reboiler of the second low-pressure propylene rectification tower, to further enhance the energy-saving effect.

In further technical solutions, within the $C_4$ reforming unit, the reaction temperature of the pretreatment reactor is 30 to 300°C, the reaction pressure is 0.05 to 6.0 MPa, and the space velocity is 0.1 to 10 h$^{-1}$. The $C_4$ reforming unit operates under liquid phase conditions with an olefin conversion rate greater than 90 m%. The operating pressure of the catalytic rectification tower is 0.6±0.3 MPa, with the bottom temperature of 60 to 200°C and the top temperature of 30 to 70°C. In the $C_4$ reforming unit, $C_4$ olefin components undergo selective reformation reactions in the pretreatment reactor, as shown in Formula 4:

$$NC_4^= \; \rightarrow \; C_K^= \qquad\qquad \text{Formula 4;}$$

where N=2, 3, or 4; and K=N*4.

Beneficial effects of the disclosure:

The present disclosure introduces a novel process of the absorption-stabilization unit, which significantly reduces the energy consumption of the absorption-stabilization unit through stepwise compression, facilitating further utilization of the products from the absorption-stabilization unit.

In the comprehensive utilization method of the products of the disclosure's absorption-stabilization unit, the effective components in the stabilized gasoline, the liquefied gas, and dry gases from the absorption and stabilization process are maximally converted into high-value-added chemical products like propylene. This conversion is achieved through cracking and reformation reactions in operational units such as the fixed bed reactor, the first fluidized bed reactor, the second fluidized bed reactor, the pretreatment reactor, and the catalytic rectification tower, along with their corresponding separation operations.

**BRIEF DESCRIPTION OF THE DRAWINGS**

Figure 1 is a flowchart of the process of the absorption-stabilization unit of the present disclosure.
Figure 2 is a flowchart of steps S3-1 and S4-1 for the comprehensive utilization method of the products of the absorption-stabilization unit of the present disclosure.
Figure 3 is a flowchart of step S4-2 for the comprehensive utilization method of the products of the absorption-stabilization unit of the present disclosure.
Figure 4 is a flowchart of step S4-3 for the comprehensive utilization method of the products of the absorption-stabilization unit of the present disclosure.

In these figures: de-heavy tower T1, stabilization tower T2, absorption tower T3, fixed bed reactor R1, first fluidized bed reactor R2, second fluidized bed reactor R3, heater L1, first compressor C1, second compressor $C_2$, first reflux tank G1, second reflux tank G2, third reflux tank G3, fourth reflux tank G4, fifth reflux tank G5, sixth reflux tank G6, seventh reflux tank G7, three-phase separator F1, $C_3$ removal tower T4, $C_2$ removal tower T5, high-pressure propylene rectification tower T6, first low-pressure propylene rectification tower T7, pretreatment reactor R4, catalytic rectification tower T8, 1#pump P1, 2#pump P2, 3#pump P3, 4#pump P4, 5#pump P5, 6#pump P6, 7#pump P7, 8#pump P8, 9#pump P9, 10#pump P10 and 11#pump P11.

**DETAILED DESCRIPTION**

The following description is disclosed to enable those skilled in the art to implement the disclosure.

Embodiment 1

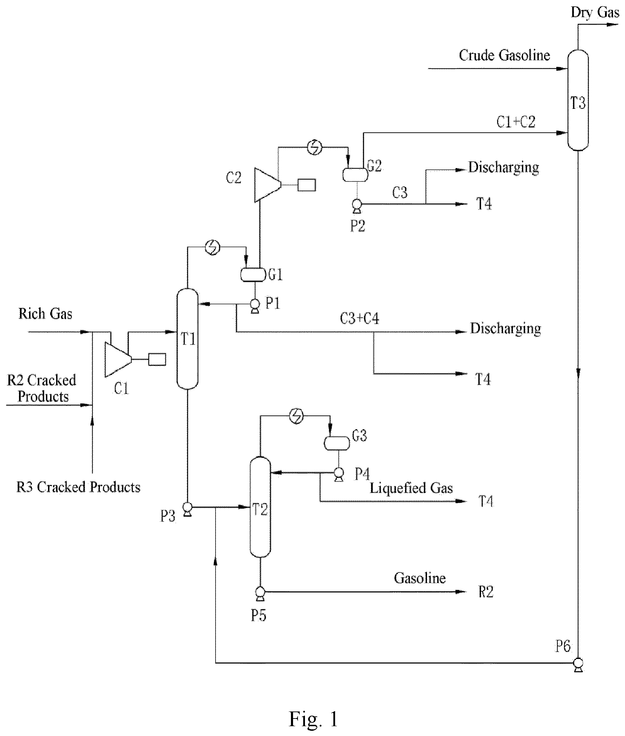

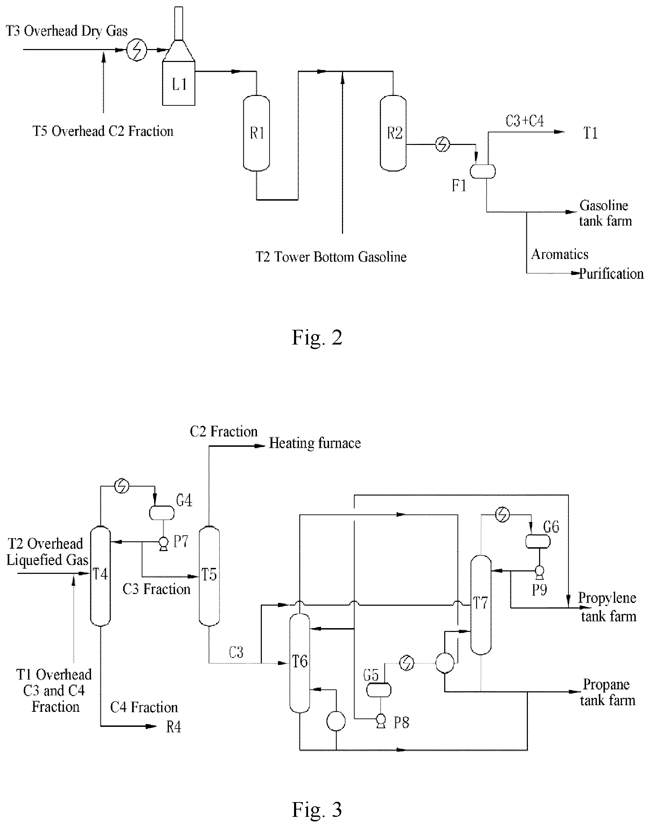

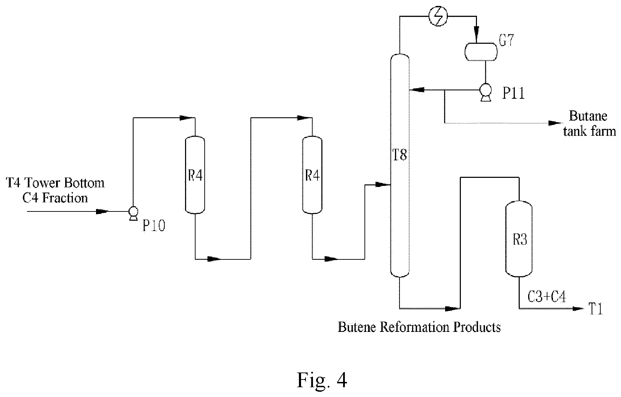

As shown in Figures 1 to 4, the process of the absorption-stabilization unit and the comprehensive utilization method of products therefrom of this embodiment particularly include the following steps.
S1 performing a primary compression of a rich gas: the rich gas from the catalytic fractionation unit is primary compressed by the first compressor C1, and pressurized to 0.6 MPa; the pressurized rich gas is directly introduced into the de-heavy tower T1 for separation by rectification; the operating pressure of the de-heavy tower T1 is 0.6 MPa, with the bottom temperature of 120°C and the top temperature of 55°C; the top fraction of the de-heavy tower T1 is condensed in the first reflux tank G1 for a gas-liquid separation, obtaining a liquid phase mainly containing $C_3C_4$ and a gas phase mainly containing $C_3$; wherein, the liquid phase mainly comprising $C_3C_4$ is partially recirculated by 1# pump P1, and partially discharged to the $C_3$ removal tower T4.
S2 performing a secondary compression of the rich gas: the gas phase mainly containing $C_3$ is drawn off from the top of the first reflux tank G1 to the inlet of the second compressor C2, wherein it is pressurized to 1.4 MPa by the second compressor C2; after the second pressurization, the gas phase is condensed in the second reflux tank G2 for a gas-liquid separation, wherein the obtained liquid phase is fed to the $C_3$ removal tower T4 by 2# pump P2, and the gas phase is fed to the bottom of the absorption tower T3. Stepwise compression can significantly reduce the energy consumption of the absorption-stabilization unit and facilitate further utilization of the products of the absorption-stabilization unit.
S3 performing an absorption of dry gases: crude gasoline from the catalytic fractionation unit is injected into the top of the absorption tower T3, wherein it is contacted with the gas phase materials introduced from the bottom of the absorption tower T3, absorbing $C_3$ and $C_4$ components from the gas phase materials; unabsorbed components, i.e., dry gases, are drawn off from the top of the absorption tower T3.
S3-1: transporting the dry gases containing a large amount of ethylene from the top of the absorption tower T3 in sequence to a heat exchanger and a heating furnace L1 for heating, then introducing the dry gases into a fixed bed reactor R1, wherein the reaction occurs under gas phase conditions with an olefin conversion rate of more than 85 m%; the catalyst filled in the fixed bed reactor R1 is ZSM5 molecular sieve; the reaction temperature in the fixed bed reactor R1 is 400°C, the reaction pressure is 1.5 MPa, and the space velocity is 5 h$^{-1}$; the olefins in the dry gases form olefins mainly containing $C_4$ to $C_8$ in the fixed bed reactor R1, and all these olefin products are fed to the first fluidized bed reactor R2.

S4 performing a gasoline stabilization: the materials from the bottom of the de-heavy tower T1 and the rich-absorption oil from the bottom of the absorption tower T3 are fed to the stabilization tower T2 through 3# pump P3 and 6# pump P6, respectively; the rich-absorption oil from the bottom of the absorption tower T3 can also be introduced into the stabilization tower T2 directly by gravity without the need for pump #6 P6; a liquefied gas fraction is produced at the top of the stabilization tower T2, and the gaseous liquefied gas fraction is condensed in a condenser and subsequently flows to the third reflux tank G3, which is subsequently pumped to the $C_3$ removal tower T4 by 4# pump P4; a gasoline fraction is produced at the bottom of the stabilization tower T2, wherein the gasoline fraction is fed to the first fluidized bed reactor R2 by 5# pump P5.

S4-1: the gasoline fraction from the stabilization tower T2 is pumped to the first fluidized bed reactor R2, where the olefins in the gasoline fraction and the olefin products from step S3-1 are cracked. The catalyst filled in the first fluidized bed reactor R2 is ZSM-5 molecular sieve. The reaction temperature in the first fluidized bed reactor R2 is 500°C, the reaction pressure is 0.15 MPa, and the space velocity is 15 h$^{-1}$. The cracked products, after being cooled by heat exchange, are introduced into the three-phase separator F1. The gas phase components, mainly containing $C_3$ and $C_4$, are drawn off from the top of the three-phase separator F1 and merged into the rich gas of the catalytic fractionation unit, then returned to the de-heavy tower T1 via the first compressor C1. The uncracked gasoline from the bottom of the three-phase separator F1 is rectified and then sent to the tank farm, and the aromatic contents in the uncracked gasoline can be further purified to obtain monomers such as benzene, toluene, and xylene through a solvent extraction process.

S4-2: the liquefied gas from the top of the stabilization tower T2 is pumped into the $C_3$ removal tower T4, from which a $C_3$ gas phase is is draw off from the top of the $C_3$ removal tower T4 and a $C_4$ fraction is drawn off from the bottom of the $C_3$ removal tower T4. The $C_3$ gas phase, after being condensed, flows to the fourth reflux tank G4, and is subsequently sent to the $C_2$ removal tower T5 via 7# pump P7. The $C_2$ fraction is drawn off from the top of the $C_2$ removal tower T5 and, after being heated in heater L1 and mixed with dry gas, is introduced into the fixed bed reactor R1 of step S3-1. The liquid phase $C_3$, a mixture of propane and propylene, is divided into two streams that are sent to the high-pressure propylene rectification tower T6 and the first low-pressure propylene rectification tower T7, respectively. After separation by rectification in these towers, high-purity propane and propylene are obtained. The high-pressure propylene rectification tower T6 and the first low-pressure propylene rectification tower T7 are thermally coupled. In other words, the gas phase propylene from the top of the high-pressure tower T6 serves as the heat source for the reboiler of the bottom of the first low-pressure tower T7. The gas phase propylene material from the top of the high-pressure propylene rectification tower T6 is used as a heat source, introduced into the reboiler inlet of the bottom of the first low-pressure propylene rectification tower T7, and after condensation, flows to the fifth reflux tank G5. Finally, the gas phase propylene material from the top of the high-pressure propylene rectification tower T6 is partially recirculated to the high-pressure propylene rectification tower T6 via 8# pump P8 and partially sent to the propylene tank farm. The liquid phase propane material from the bottom of the high-pressure propylene rectification tower T6 is partially recirculated through the bottom reboiler to the tower T6 and partially sent to the propane tank farm. The gas phase propylene material from the top of the first low-pressure propylene rectification tower T7, after condensation, flows to the sixth reflux tank G6, and then is partially recirculated to the first low-pressure propylene rectification tower T7 via 9# pump P9, with the remainder sent to the propylene tank farm. The liquid phase propane material from the bottom of the first low-pressure propylene rectification tower T7 is partially recirculated through the bottom reboiler to the tower T7, with the remainder sent to the propane tank farm. The temperature at the top of the high-pressure propylene rectification tower T6 is 6°C higher than the temperature at the bottom of the first low-pressure propylene rectification tower T7. The ratio of the feed flow rate of the $C_3$ liquid phase in the high-pressure propylene rectification tower T6 to that in the first low-pressure propylene rectification tower T7 is 1.1:1. The operating pressure of the high-pressure propylene rectification tower T6 is 2.6 MPa, with the bottom temperature of 74°C and the top temperature of 63°C. The operating pressure of the first low-pressure propylene rectification tower T7 is 1.6 MPa, with the bottom temperature of 53°C and the top temperature of 40°C. Compared to conventional single-tower propylene rectification, the propylene rectification towers operating in a thermal coupling manner according to the present disclosure achieve an energy-saving effect of no less than 40%. As a further optimization, a three-tower thermal coupling operation for propylene rectification can be adopted, further enhancing the energy-saving effect. In this arrangement, the gas phase from the top of the first low-pressure propylene rectification tower serves as the heat source for the reboiler of the bottom of the second low-pressure propylene rectification tower. The temperature at the top of the first low-pressure propylene rectification tower is 3°C to 15°C higher than the temperature at the bottom of the second low-pressure propylene rectification tower. For example, the operating pressure of the second low-pressure propylene rectification tower can be set to 0.6 MPa, with the bottom temperature of 35°C and the top temperature of 15°C.

S4-3: the $C_4$ fraction from the $C_3$ removal tower T4 is pumped into the $C_4$ reforming unit by 10# pump P10, wherein the $C_4$ reforming unit is equipped with a pre-treatment reactor R4 and a catalytic rectification tower T8. The catalyst loaded in the pre-treatment reactor R4 is MCM molecular sieve. The reaction conditions in the $C_4$ reforming unit are set at a temperature of 150°C, a pressure of 3.0MPa, and a space velocity of 5h$^{-1}$, with the reaction taking place under liquid phase conditions and an olefin conversion rate of over 90m%. The operating pressure of the catalytic rectification tower T8 is 0.6MPa, with the bottom temperature of 170°C and the top temperature of 50°C. After the $C_4$ mixture is

processed sequentially through the pre-treatment reactor R4 and the catalytic rectification tower T8, butane is produced at the top of tower T8. The butane is subsequently condensed and flows to the seventh reflux tank G7, from which it is partly recirculated to the catalytic rectification tower T8 by 11# pump P11 and partly discharged to the butane tank farm. The butene reformation product is discharged from the bottom of the catalytic rectification tower T8 and is fed to the second fluidized bed reactor R3, which is loaded with a MCM molecular sieve catalyst. The reaction conditions in the second fluidized bed reactor R3 are as follows: a temperature of 420°C, a pressure of 0.15MPa, and a space velocity of 30h$^{-1}$. The butene reformation product is again cracked into gas-phase components mainly containing $C_3$ and $C_4$, which are likewise integrated into the rich gas of the catalytic fractionation unit and returned to the de-heavy tower T1 via the first compressor C1. In the present disclosure, through cracking and reformation reactions and their corresponding separation operations in the fixed bed reactor R1, the first fluidized bed reactor R2, the second fluidized bed reactor R3, the pre-treatment reactor R4, and the catalytic rectification tower T8,the effective components in the stabilized gasoline, liquefied gas, and dry gas obtained after adopting the absorption-stabilization process are maximally converted into high value-added chemical products such as propylene.

The operating conditions and treatment effects of this embodiment, as a substitute for part of the technical solutions, are shown in Table 1.

Wherein, the operating conditions for Embodiments 1-1, 1a-1, 1b-1, and 1c-1 are essentially the same as those for Embodiments 1, 1a, 1b, and 1c, respectively. The difference lies in the type of catalyst loaded in the first and second fluidized bed reactors R2 and R3 for Embodiments 1-1, 1a-1, 1b-1, and 1c-1, as detailed in Table 1.

Table 1

| Serial No. and Name | | Operating Conditions | Embodiment 1 | Embodiment 1a | Embodiment 1b | Embodiment 1c |
|---|---|---|---|---|---|---|
| 1 | De-heavy tower T1 | Tower top pressure | 0.6MPa | 0.4MPa | 0.8MPa | 0.65MPa |
| | | Tower top temperature | 55°C | 40°C | 70°C | 60°C |
| | | Tower bottom temperature | 120°C | 100°C | 180°C | 150°C |
| 2 | Fixed-bed Reactor R1 | Reaction temperature | 400°C | 300°C | 500°C | 450°C |
| | | Reaction pressure | 1.5MPa | 0.3MPa | 3.0MPa | 2.0MPa |
| | | Space velocity | 5h$^{-1}$ | 0.1h$^{-1}$ | 10h$^{-1}$ | 2h$^{-1}$ |
| | | Catalyst | ZSM5 | ZSM5 | ZSM5 | ZSM5 |
| 3 | First Fluidized Bed Reactor R2 | Reaction temperature | 500°C | 350°C | 650°C | 550°C |
| | | Reaction pressure | 0.15MPa | 0.05MPa | 0.25MPa | 0.10MPa |
| | | Space velocity | 15h$^{-1}$ | 1 h$^{-1}$ | 30 h$^{-1}$ | 20 h$^{-1}$ |
| | | Catalyst | ZSM5 | ZSM5 | ZSM5 | ZSM5 |
| 4 | Second Fluidized Bed Reactor R3 | Reaction temperature | 420°C | 550°C | 350°C | 500°C |
| | | Reaction pressure | 0.15MPa | 0.35MPa | 0.05MPa | 0.20MPa |
| | | Space velocity | 30 h$^{-1}$ | 10 h$^{-1}$ | 50 h$^{-1}$ | 40 h$^{-1}$ |
| | | Catalyst | MCM | MCM | MCM | MCM |

(continued)

| Serial No. and Name | | | Operating Conditions | Embodiment 1 | Embodiment 1a | Embodiment 1b | Embodiment 1c |
|---|---|---|---|---|---|---|---|
| 5 | | High-pressure Propylene Rectification tower T6 | Tower top pressure | 2.6MPa | 2.2MPa | 3.2MPa | 3.0MPa |
| | | | Tower top temperature | 63°C | 56°C | 74°C | 70°C |
| | | | Tower bottom temperature | 74°C | 69°C | 85°C | 82°C |
| | | | Feed ratio to Tower T7 | 1.1: 1 | 0.8:1 | 1.5:1 | 1.3:1 |
| 6 | | First Low-pressure Propylene Rectification tower T7 | Tower top pressure | 1.6MPa | 1.2MPa | 2.2MPa | 1.8MPa |
| | | | Tower top temperature | 40°C | 35°C | 55°C | 45°C |
| | | | Tower bottom temperature | 53°C | 48°C | 66°C | 58°C |
| 7 | | Pretreatment Reactor R4 | Reaction temperature | 150°C | 30°C | 220°C | 200°C |
| | | | Reaction pressure | 3.0MPa | 0.05MPa | 6.0MPa | 4.0MPa |
| | | | Space velocity | 5 h$^{-1}$ | 0.5 h$^{-1}$ | 10 h$^{-1}$ | 7 h$^{-1}$ |
| | | | Catalyst | MCM | MCM | MCM | MCM |
| 8 | | Catalytic Rectification tower T8 | Tower top pressure | 0.6MPa | 0.3MPa | 0.9MPa | 0.7MPa, |
| | | | Tower top temperature | 50°C | 30°C | 70°C | 60°C |
| | | | Tower bottom temperature | 170°C | 108°C | 210°C | 180°C |
| 9 | | Total yield of propylene (≥%) | | 40m% | 35m% | 45m% | 37m% |
| 10 | | Energy savings (≥%) | | 42% | 40% | *50%* | 45% |
| | | | | Embodiment 1-1 | Embodiment 1a-1 | Embodiment 1b-1 | Embodiment 1c-1 |
| 11 | | Catalyst for the first fluidized bed reactor R2 | | ZSM35 | ZSM35 | ZSM35 | ZSM35 |
| 12 | | Catalyst for the second fluidized bed reactor R3 | | SAPO | SAPO | SAPO | SAPO |
| 13 | | Total yield of propane and butane (≥%) | | 65m% | 60m% | 70m% | 62m% |
| 14 | | Energy savings (≥%) | | 42% | 40% | *50%* | 45% |

From the test data in Table 1, it is evident that the cracking reactions in the first fluidized bed reactor R2 and the second fluidized bed reactor R3 exhibit significant selectivity. In the process of the present disclosure, when the catalysts loaded in the first fluidized bed reactor R2 and the second fluidized bed reactor R3 are respectively ZSM5 and MCM series molecular sieves, the total yield of propylene is not less than 35m%. In contrast, when the catalysts loaded are ZSM35 and SAPO series molecular sieves, respectively, the total yield of propane and butane is not less than 60m%. Additionally, compared to the existing absorption-stabilization unit and its product utilization method, the method of the present disclosure for the absorption-stabilization unit and its product utilization saves more than 40% in energy consumption.

In the second aspect, this application provides an absorption-stabilization system, which may include a first compressor, a first reflux tank, a second compressor, a second reflux tank, an absorption tower, and a stabilization tower. The first compressor is used to primarily compress the rich gas from the catalytic fractionation unit, obtaining a rich gas at a pressure of $0.6\pm0.2$MPa. The de-heavy tower is used to separate the rich gas at a pressure of $0.6\pm0.2$MPa by rectification, obtaining a top fraction of the de-heavy tower. The first reflux tank is used to condense the top fraction of the de-heavy tower and separate the condensed top fraction into a liquid phase mainly containing $C_3$-$C_4$ and a gas phase mainly containing $C_3$. The second compressor is used to secondarily compress the gas phase mainly containing $C_3$, obtaining a gas phase at a pressure of $1.4\pm0.3$MPa mainly containing $C_3$. The second reflux tank is used to condense the gas phase at a pressure of $1.4\pm0.3$MPa to obtain a liquid phase and a gas phase mainly containing $C_3$. The absorption tower uses the crude gasoline from the catalytic fractionation unit to absorb $C_3$ and $C_4$ components in the gas phase mainly containing $C_3$, forming a rich-absorption oil, with the unabsorbed components, i.e., dry gases, being drawn off from the top of the absorption tower. The stabilization tower is used to stabilize the materials from the bottom of the de-heavy tower and the rich-absorption oil from the bottom of the absorption tower, wherein a liquefied gas fraction is drawn off from the top of the stabilization tower and a gasoline fraction is drawn off from the bottom of the stabilization tower.

In one embodiment of the second aspect, the absorption-stabilization system further includes a fixed-bed reactor, a first fluidized bed reactor, and a three-phase separator. The fixed-bed reactor is used to react the olefins in the dry gases from the absorption tower to produce olefins mainly containing $C_4$ to $C_8$, which are then entirely sent to the first fluidized bed reactor. The first fluidized bed reactor is used to crack the olefins mainly containing $C_4$ to $C_8$ from the fixed-bed reactor and the gasoline fraction from the bottom of the stabilization tower, obtaining cracked products. The three-phase separator is used to separate these cracked products, wherein a gas phase mainly containing $C_3$ and $C_4$ is drawn off from the top of the three-phase separator, and subsequently merged into the rich gas from the catalytic fractionation unit and returned to the de-heavy tower via the first compressor. The uncracked gasoline is drawn off from the bottom of the three-phase separator.

In another embodiment of the second aspect, the absorption-stabilization system further includes a $C_3$ removal tower and a $C_2$ removal tower. In this embodiment, the $C_3$ removal tower is used to remove the $C_3$ gas phase from the liquefied gas at the top of the stabilization tower, obtaining a $C_3$ gas phase at the top of the $C_3$ removal tower and a $C_4$ fraction at the bottom of the $C_3$ removal tower. The $C_3$ gas phase, after being condensed, is sent to the $C_2$ removal tower, and a $C_2$ fraction is drawn off from the top of the $C_2$ removal tower and mixed with dry gas into the fixed-bed reactor. A liquid phase $C_3$, a mixture of propane and propylene, is drawn off from the bottom of the $C_2$ removal tower.

In yet another embodiment of the second aspect, the liquid phase $C_3$ from the $C_2$ removal tower is divided into two streams that are sent respectively to a high-pressure propylene rectification tower and a first low-pressure propylene rectification tower, or divided into three streams sent respectively to a high-pressure propylene rectification tower, a first low-pressure propylene rectification tower, and a second low-pressure propylene rectification tower, with the products of the rectification operation of each tower being high-purity propane and propylene.

In a further embodiment of the second aspect, the absorption-stabilization system also includes a $C_4$ reforming unit and a second fluidized bed reactor. The $C_4$ reforming unit is equipped with a pretreatment reactor and a catalytic rectification tower, which process the $C_4$ fraction from the bottom of the $C_3$ removal tower. After being processed sequentially through the pretreatment reactor and the catalytic rectification tower, butane is drawn off from the top of the catalytic rectification tower, and the butene reformation products are drawn off from the bottom of the catalytic rectification tower. The second fluidized bed reactor is used to further crack the butene reformation products into a gas phase mainly containing $C_3$ and $C_4$, which is then returned to the de-heavy tower.

The above description outlines the basic principles, main features, and advantages of the disclosure.

**Claims**

1. A novel process of an absorption-stabilization unit, comprising the following steps of:

S1 performing a primary compression of a rich gas: compressing the rich gas from a catalytic fractionation unit by a first compressor to a pressure of $0.6\pm0.2$MPa, wherein the compressed rich gas is directly fed into a de-heavy tower for separation by rectification; condensing the overhead fraction of the de-heavy tower at the top of the de-heavy tower and subjecting it to a gas-liquid separation inside a first reflux tank, obtaining a liquid phase mainly containing $C_3$ and $C_4$, and a gas phase mainly containing $C_3$, wherein the liquid phase mainly containing C3C4 is partially refluxed and partially discharged to a tank farm or a C3 removal tower;
S2 performing a secondary compression of the rich gas: introducing the gas phase mainly containing $C_3$ from the top of the first reflux tank to an inlet of a second compressor, where it is compressed to $1.4\pm0.3$MPa by a second compressor; after the secondary compression, condensing the gas phase and subjecting it to a gas-liquid separation inside a second reflux tank, with the separated liquid phase being discharged to a $C_3$ removal tower,

EP 4 394 018 B1

and the gas phase being sent to the bottom of an absorption tower;

S3 performing an absorption of dry gases: injecting the crude gasoline from the catalytic fractionation unit into the top of the absorption tower, wherein the crude gasoline is contacted with the gas phase materials from the bottom of the absorption tower, and wherein the crude gasoline absorbs $C_3$ and $C_4$ components from the gas phase materials to form a rich-absorption oil, while the unabsorbed components, i.e., the dry gases, are drawn off from the top of the absorption tower;

S4 performing a gasoline stabilization: feeding the materials from the bottom of the de-heavy tower and the rich-absorption oil from the bottom of the absorption tower respectively into a stabilization tower, wherein a liquefied gas fraction is drawn off from the top of the stabilization tower, and a gasoline fraction is drawn off from the bottom of stabilization tower.

2. The novel process of an absorption-stabilization unit of claim 1, wherein, an operating pressure of the de-heavy tower is $0.6\pm0.2$MPa, a temperature at the bottom of the tower is between 60 to 180°C, and a temperature at the top of the tower is between 40 to 70°C.

3. A comprehensive utilization method of products from an absorption-stabilization unit, wherein, the method comprises the steps of any of claims 1-2, and the method further comprises the following steps of:

S3-1: transporting the dry gases with a high ethylene content from the top of the absorption tower sequentially to a heat exchanger and a heating furnace for heating, and then introducing the dry gases into a fixed-bed reactor, wherein the olefins in the dry gases are converted into olefins mainly containing $C_4$ to $C_8$ within the fixed-bed reactor, and all the olefin products are fed to a first fluidized bed reactor;

S4-1: pumping the gasoline fraction from the bottom of the stabilization tower to the first fluidized bed reactor, wherein the olefins in the gasoline fraction and the olefin products from step S3-1 are cracked within the first fluidized bed reactor; the cracked products are cooled via heat exchange before being introduced into a three-phase separator; the gas phase components mainly containing $C_3$ and $C_4$ are drawn off from the top of the three-phase separator and merged with the rich gas from the catalytic fractionation unit, then returned to the de-heavy tower through the first compressor; an uncracked gasoline is drawn off from the bottom of the three-phase separator, and the uncracked gasoline is rectified and subsequently discharged to a tank farm, wherein the aromatics are further purified through a solvent extraction process to obtain monomers such as benzene, toluene, and xylene;

S4-2: pumping the liquefied gas from the top of the stabilization tower into the $C_3$ removal tower, wherein the $C_3$ gas phase is drawn off from the top and the $C_4$ fraction is drawn off from the bottom of the $C_3$ removal tower; the $C_3$ gas phase is pumped into a $C_2$ removal tower after being condensed, wherein the $C_2$ fraction is drawn off from the top of the $C_2$ removal tower, mixed with the dry gas, and then fed into the fixed-bed reactor of step S3-1; a $C_3$ liquid phase, namely a mixture of propane and propylene, is drawn off from the bottom of the $C_2$ removal tower; the $C_3$ liquid phase is divided into two streams, wherein one stream is fed to a high-pressure propylene rectification tower and the other stream fed to a first low-pressure propylene rectification tower, or, the C3 liquid phase is divided into three streams fed respectively to a high-pressure propylene rectification tower, a first low-pressure propylene rectification tower, and a second low-pressure propylene rectification tower, with the products of each tower's rectification operation being high-purity propane and propylene;

S4-3: pumping the $C_4$ fraction from the bottom of the $C_3$ removal tower into a $C_4$ reforming unit, which is equipped with a pretreatment reactor and a catalytic rectification tower; after the $C_4$ mixture is processed sequentially through the pretreatment reactor and the catalytic rectification tower, butane is drawn off from the top of the catalytic rectification tower, and butene reformation products are produced from the bottom of the catalytic rectification tower, wherein the butene reformation products are subsequently sent to a second fluidized bed reactor for further cracking into gas phase components mainly containing $C_3$ and $C_4$, and the gas phase components are also merged with the rich gas from the catalytic fractionation unit and returned to the de-heavy tower through the first compressor.

4. The comprehensive utilization method of claim 3, wherein a reaction temperature of the fixed-bed reactor is between 300°C to 500°C, a reaction pressure is between 0.3 to 3.0 MPa, and a space velocity is between 0.1 to 10 h$^{-1}$.

5. The comprehensive utilization method of claim 3, wherein the reaction in the fixed-bed reactor occurs under gas phase conditions with an olefin conversion rate greater than 85 m%.

6. The comprehensive utilization method of claim 3, wherein the reaction temperature of the first fluidized bed reactor is between 350°C to 650°C, the reaction pressure is between 0.05 to 1.0 MPa, and a space velocity is between 1 to 30

$h^{-1}$.

7. The comprehensive utilization method of claim 3, wherein the reaction temperature of the second fluidized bed reactor is between 300°C to 550°C, the reaction pressure is between 0.01 to 1.0 MPa, and the space velocity is between 10 to 50 $h^{-1}$.

8. The comprehensive utilization method of claim 3, wherein the temperature at the top of the high-pressure propylene rectification tower is 3°C to 15°C higher than the temperature at the bottom of the first low-pressure propylene rectification tower; and the temperature at the top of the first low-pressure propylene rectification tower is 3°C to 15°C higher than the temperature at the bottom of the second low-pressure propylene rectification tower.

9. The comprehensive utilization method of claim 3, wherein a ratio of a feed flow rate of the $C_3$ liquid phase to the high-pressure propylene rectification tower and a feed flow rate of the $C_3$ liquid phase to the low-pressure propylene rectification tower is between 0.5:1 to 2.0:1.

10. The comprehensive utilization method of claim 3, wherein the high-pressure propylene rectification tower and the low-pressure propylene rectification tower are thermally coupled, i.e., the oil gas from the top of the high-pressure propylene rectification tower serves as a heat source for a reboiler at the bottom of the first low-pressure propylene rectification tower; and the oil gas from the top of the first low-pressure propylene rectification tower serves as a heat source for another reboiler at the bottom of the second low-pressure propylene rectification tower.

11. The comprehensive utilization method of claim 3, wherein the reaction temperature of the $C_4$ reforming unit is between 30°C to 300°C, the reaction pressure is between 0.05 to 6.0 MPa, and a space velocity is between 0.1 to 10 $h^{-1}$.

12. The comprehensive utilization method of claim 3, wherein the reaction in the $C_4$ reforming unit occurs under liquid phase conditions with an olefin conversion rate greater than 90 m%.

13. An absorption-stabilization system, comprising:

    a first compressor for a primary compression of a rich gas from a catalytic fractionation unit, obtaining a rich gas at a pressure of 0.6±0.2 MPa;
    a de-heavy tower for separation by rectification of the rich gas at the pressure of 0.6±0.2 MPa, obtaining an overhead fraction from the de-heavy tower;
    a first reflux tank for condensing the overhead fraction from the de-heavy tower and performing a gas-liquid separation on the condensed overhead fraction from de-heavy tower, obtaining a liquid phase mainly containing $C_3$ and $C_4$ and a gas phase mainly containing $C_3$;
    a second compressor for a secondary compression of the gas phase mainly containing $C_3$, obtaining a gas phase mainly containing $C_3$ at a pressure of 1.4±0.3 MPa;
    a second reflux tank for condensing the gas phase mainly containing $C_3$ at a pressure of 1.4±0.3 MPa, obtaining a liquid phase mainly containing $C_3$ and a gas phase mainly containing $C_3$;
    an absorption tower for using crude gasoline from the catalytic fractionation unit to absorb $C_3$ and $C_4$ components in the gas phase mainly containing $C_3$, forming a rich-absorption oil, with the unabsorbed components, i.e., dry gases, being drawn off from the top of the absorption tower; and
    a stabilization tower for stabilizing materials from the bottom of the de-heavy tower and the rich-absorption oil from the bottom of the absorption tower, with a liquefied gas fraction being produced from the top of the stabilization tower and a gasoline fraction being produced from the bottom of the stabilization tower.

14. The absorption-stabilization system of claim 13, further comprising:

    a fixed-bed reactor for reacting olefins in the dry gas from the absorption tower to obtain olefins mainly containing $C_4$ to $C_8$, which are sent to a first fluidized bed reactor;
    a first fluidized bed reactor for cracking olefins mainly containing $C_4$ to $C_8$ from the fixed-bed reactor and gasoline fraction from the bottom of the stabilization tower to obtain cracked products; and
    a three-phase separator for separating the cracked products, wherein a gas phase mainly containing $C_3$ and $C_4$ is drawn off from the top of the three-phase separator, and the gas phase is merged with the rich gas from the catalytic fractionation unit and returned to the de-heavy tower through the first compressor; and, wherein an uncracked gasoline is drawn off from the bottom of the three-phase separator.

15. The absorption-stabilization system of claim 14, further comprising:

a $C_3$ removal tower for removing $C_3$ gas phase from the liquefied gas from the top of the stabilization tower, with $C_3$ gas phase being produced from the top of the $C_3$ removal tower and $C_4$ fraction being produced from the bottom of the $C_3$ removal tower; and
a $C_2$ removal tower, wherein the $C_3$ gas phase is transported to the $C_2$ removal tower after being condensed, and a $C_2$ fraction is drawn off from the top of the $C_2$ removal tower, which is mixed with dry gas and introduced into the fixed-bed reactor; and, wherein a $C_3$ liquid phase is drawn off from the bottom of the $C_2$ removal tower, i.e., a mixture of propane and propylene.

16. The absorption-stabilization system of claim 15, wherein, the $C_3$ liquid phase from the $C_2$ removal tower is divided into two streams fed respectively to a high-pressure propylene rectification tower and a first low-pressure propylene rectification tower, or, the $C_3$ liquid phase from the $C_2$ removal tower is divided into three streams fed respectively to a high-pressure propylene rectification tower, a first low-pressure propylene rectification tower, and a second low-pressure propylene rectification tower, with the products of each tower's rectification operation being high-purity propane and propylene;
preferably, the high-pressure propylene rectification tower and the first low-pressure propylene rectification tower are thermally coupled, i.e., the oil gas from the top of the high-pressure propylene rectification tower serves as a heat source for a reboiler at the bottom of the first low-pressure propylene rectification tower; and the oil gas from the top of the first low-pressure propylene rectification tower serves as a heat source for another reboiler at the bottom of the second low-pressure propylene rectification tower.

17. The absorption-stabilization system of claims 15 or 16, wherein, the absorption-stabilization system further comprises:

a $C_4$ reforming unit comprising a pretreatment reactor and a catalytic rectification tower for processing the $C_4$ fraction from the bottom of the $C_3$ removal tower; the $C_4$ fraction from the bottom of the $C_3$ removal tower is processed sequentially through the pretreatment reactor and the catalytic rectification tower, with butane being produced from the top of the catalytic rectification tower and butene reformation products being produced from the bottom of the catalytic rectification tower; and
a second fluidized bed reactor for further cracking the butene reformation products into a gas phase mainly containing $C_3$ and $C_4$, wherein the gas phase mainly containing $C_3$ and $C_4$ is returned to the de-heavy tower.

**Patentansprüche**

1. Neuartiges Verfahren einer Absorptions-Stabilisierungsanlage, umfassend die folgenden Schritte:

S1: Durchführen einer Primärkompression eines reichhaltigen Gases: Komprimieren des reichhaltigen Gases aus einer katalytischen Fraktionierungseinheit mittels eines ersten Kompressors auf einen Druck von $0{,}6 \pm 0{,}2$ MPa, wobei das komprimierte reichhaltige Gas direkt in eine Entschwerungskolonne zur Trennung durch Rektifikation eingespeist wird; Kondensieren der Kopfproduktfraktion der Entschwerungskolonne am Kopf der Entschwerungskolonne und Unterziehen einer Gas-Flüssig-Trennung in einem ersten Rücklauftank, wobei eine flüssige Phase, die hauptsächlich $C_3$ und $C_4$ enthält, und eine gasförmige Phase, die hauptsächlich $C_3$ enthält, erhalten werden, wobei die flüssige Phase, die hauptsächlich $C_3C_4$ enthält, teilweise zurückgeführt und teilweise in ein Tanklager oder eine $C_3$-Entfernungskolonne abgeführt wird;
S2: Durchführen einer Sekundärkompression des reichhaltigen Gases: Einleiten der gasförmigen Phase, die hauptsächlich $C_3$ enthält, vom Kopf des ersten Rücklauftanks zu einem Einlass eines zweiten Kompressors, wobei sie durch einen zweiten Kompressor auf $1{,}4 \pm 0{,}3$ MPa komprimiert wird; nach der Sekundärkompression, Kondensieren der gasförmigen Phase und Unterziehen einer Gas-Flüssig-Trennung in einem zweiten Rücklauftank, wobei die getrennte flüssige Phase in eine $C_3$-Entfernungskolonne abgeführt wird und die gasförmige Phase zum Boden einer Absorptionskolonne geleitet wird;
S3: Durchführen einer Absorption von Trockengasen: Einspritzen des Rohbenzins aus der katalytischen Fraktionierungseinheit in den Kopf der Absorptionskolonne, wobei das Rohbenzin mit den Gasphasenmaterialien aus dem Boden der Absorptionskolonne in Kontakt gebracht wird, und wobei das Rohbenzin $C_3$- und $C_4$-Komponenten aus den Gasphasenmaterialien absorbiert, um ein reichhaltiges Absorptionsöl zu bilden, während die nicht absorbierten Komponenten, d. h. die Trockengase, aus dem Kopf der Absorptionskolonne abgezogen werden;

S4: Durchführen einer Benzinstabilisierung: Zuführen der Materialien aus dem Boden der Entschwerungskolonne und des reichhaltigen Absorptionsöls aus dem Boden der Absorptionskolonne jeweils in einer Stabilisierungskolonne, wobei eine verflüssigte Gasfraktion aus dem Kopf der Stabilisierungskolonne abgezogen wird und eine Benzinfraktion aus dem Boden der Stabilisierungskolonne abgezogen wird.

2. Neuartige Verfahren einer Absorptions-Stabilisierungsanlage nach Anspruch 1, wobei der Betriebsdruck der Ent-schwerungskolonne $0,6\pm0,2$ MPa beträgt, die Temperatur am Boden der Kolonne zwischen 60 und 180°C liegt und die Temperatur am Kopf der Kolonne zwischen 40 und 70°C liegt.

3. Umfassendes Verwertungsverfahren von Produkten aus einer Absorptions-Stabilisierungsanlage , wobei das Verfahren die Schritte eines der Ansprüche 1 bis 2 umfasst, und das Verfahren weiterhin die folgenden Schritte umfasst:

S3-1: Transportieren der Trockengase mit hohem Ethylengehalt vom Kopf der Absorptionskolonne nacheinander zu einem Wärmetauscher und einem Heizofen zum Erhitzen und anschließend Einleiten der Trockengase in einen Festbettreaktor, wobei die Olefine in den Trockengasen in Olefine, die hauptsächlich $C_4$ bis $C_8$ enthalten, im Festbettreaktor umgewandelt werden, und alle Olefinprodukte einem ersten Wirbelschichtreaktor zugeführt werden;

S4-1: Fördern der Benzinfraktion vom Boden der Stabilisierungssäule zum ersten Wirbelschichtreaktor, wobei die Olefine in der Benzinfraktion und die Olefinprodukte aus Schritt S3-1 im ersten Wirbelschichtreaktor gecrackt werden; wobei die gecrackten Produkte durch Wärmeaustausch gekühlt werden , bevor sie in einen Dreiphasenseparator eingeführt werden; wobei die Gasphasenkomponete, die hauptsächlich $C_3$ und $C_4$ enthalten, vom Kopf des Dreiphasenseparators abgezogen und mit dem reichhaltigen Gas aus der katalytischen Fraktionierungseinheit zusammengeführt werden , dann durch den ersten Kompressor in die Entschwerungskolonne zurückgeführt; wobei ein ungecracktes Benzin vom Boden des Dreiphasenseparators abgezogen wird, und das ungecrackte Benzin rektifiziert und anschließend in ein Tanklager abgeführt wird , wobei die Aromaten durch ein Lösungsmittel-Extraktionsverfahren weiter gereinigt werden, um Monomere wie Benzol, Toluol und Xylol zu erhalten;

S4-2: Fördern des verflüssigten Gases vom Kopf der Stabilisierungskolonne in die $C_3$-Entfernungskolonne, wobei die $C_3$-Gasphase vom Kopf und die $C_4$-Fraktion vom Boden der $C_3$-Entfernungskolonne abgezogen wird; Wobei die $C_3$-Gasphase nach der Kondensation in eine $C_2$-Entfernungskolonne gepumpt wird , wobei die $C_2$-Fraktion vom Kopf der $C_2$-Entfernungskolonne abgezogen, mit dem Trockengas vermischt und anschließend in den Festbettreaktor des Schritts S3-1 eingespeist wird; wobei eine $C_3$-Flüssigphase, nämlich ein Gemisch aus Propan und Propylen, vom Boden der $C_2$-Entfernungskolonne abgezogen wird; wobei die $C_3$-Flüssigphase in zwei Ströme aufgeteilt wird , wobei ein Strom in eine Hochdruck-Propylenrektifikationskolonne und der andere Strom in eine erste Niederdruck-Propylenrektifikationskolonne eingespeist wird, oder wobei die $C_3$-Flüssig-phase wird in drei Ströme aufgeteilt, die jeweils in eine Hochdruck-Propylenrektifikationskolonne, eine erste Niederdruck-Propylenrektifikationskolonne und eine zweite Niederdruck-Propylenrektifikationskolonne eingespeist werden, wobei die Produkte der jeweiligen Rektifikationsoperationen jeder Kolonne hochreines Propan und Propylen sind;

S4-3: Fördern der $C_4$-Fraktion vom Boden der $C_3$-Entfernungskolonne in eine $C_4$-Reformierungseinheit, die mit einem Vorbehandlungsreaktor und einer katalytischen Rektifikationskolonne ausgestattet ist; nach der sequen-tiellen Verarbeitung des $C_4$-Gemisches durch den Vorbehandlungsreaktor und die katalytische Rektifikationskolonne Butan vom Kopf der katalytischen Rektifikationskolonne abgezogen wird, und Buten-Reformierungsprodukte vom Boden der katalytischen Rektifikationskolonne erzeugt werden , wobei die Buten-Reformierungsprodukte anschließend in einen zweiten Wirbelschichtreaktor zur weiteren Spaltung in Gasphasenkomponen-ten, die hauptsächlich $C_3$ und $C_4$ enthalten, überführt werden, und die Gasphasenkomponenten ebenfalls mit dem reichhaltigen Gas aus der katalytischen Fraktionierungseinheit zusammengeführt und durch den ersten Kompressor in die Entschwerungskolonne zurückgeführt werden.

4. Umfassendes Verwertungsverfahren nach Anspruch 3, wobei die Reaktionstemperatur des Festbettreaktors zwischen 300°C und 500°C liegt, der Reaktionsdruck zwischen 0,3 und 3,0 MPa liegt und die Raumgeschwindigkeit zwischen 0,1 und 10 $h^{-1}$ liegt.

5. Umfassendes Verwertungsverfahren nach Anspruch 3, wobei die Reaktion im Festbettreaktor unter Gasphasenbedingungen mit einer Olefinkonversionsrate von mehr als 85 m% erfolgt.

6. Umfassendes Verwertungsverfahren nach Anspruch 3, wobei die Reaktionstemperatur des ersten Wirbelschichtreaktors zwischen 350°C und 650°C liegt, der Reaktionsdruck zwischen 0,05 und 1,0 MPa liegt und die Raumgeschwindigkeit zwischen 1 und 30 h$^{-1}$ liegt.

7. Umfassendes Verwertungsverfahren nach Anspruch 3, wobei die Reaktionstemperatur des zweiten Wirbelschichtreaktors zwischen 300°C und 550°C liegt, der Reaktionsdruck zwischen 0,01 und 1,0 MPa liegt und die Raumgeschwindigkeit zwischen 10 und 50 h$^{-1}$ liegt.

8. Umfassendes Verwertungsverfahren nach Anspruch 3, wobei die Temperatur an dem Kopf der Hochdruck-Propylenrektifikationskolonne 3 °C bis 15 °C höher ist als die Temperatur am Boden der ersten Niederdruck-Propylenrektifikationskolonne; und die Temperatur an dem Kopf der ersten Niederdruck-Propylenrektifikationskolonne 3 °C bis 15 °C höher ist als die Temperatur am Boden der zweiten Niederdruck-Propylenrektifikationskolonne.

9. Umfassendes Verwertungsverfahren nach Anspruch 3, wobei ein Verhältnis der Zuflussrate der C$_3$-Flüssigphase zur Hochdruck-Propylenrektifikationskolonne und der Zuflussrate der C$_3$-Flüssigphase zur Niederdruck-Propylenrektifikationskolonne zwischen 0,5:1 und 2,0:1 liegt.

10. Umfassendes Verwertungsverfahren nach Anspruch 3, wobei die Hochdruck-Propylenrektifikationskolonne und die Niederdruck-Propylenrektifikationkolonne thermisch gekoppelt sind, d. h., das Ölgas vom Kopf der Hochdruck-Propylenrektifikationskolonne dient als Wärmequelle für einen Wiederkocher am Boden der ersten Niederdruck-Propylenrektifikationskolonne; und das Ölgas vom Kopf der ersten Niederdruck-Propylenrektifikationskolonne dient als Wärmequelle für einen weiteren Wiederkocher am Boden der zweiten Niederdruck-Propylenrektifikationskolonne.

11. Umfassendes Verwertungsverfahren nach Anspruch 3, wobei die Reaktionstemperatur der C$_4$-Reformierungseinheit zwischen 30°C und 300°C liegt, der Reaktionsdruck zwischen 0,05 und 6,0 MPa liegt und die Raumgeschwindigkeit zwischen 0,1 und 10 h$^{-1}$ liegt.

12. Umfassendes Verwertungsverfahren nach Anspruch 3, wobei die Reaktion in der C$_4$-Reformierungseinheit unter Flüssigphasenbedingungen mit einer Olefinkonversionsrate von mehr als 90 m% erfolgt.

13. Absorptions-Stabilisierungssystem, umfassend:

ein erster Kompressor zur Primärkompression eines reichhaltigen Gases aus einer katalytischen Fraktionierungseinheit, wobei ein reichhaltiges Gas mit einem Druck von 0,6±0,2 MPa erhalten wird; eine Entschwerungskolonne zur Trennung des reichhaltigen Gases durch Rektifikation bei einem Druck von 0,6±0,2 MPa, Gewinnung einer Kopfproduktfraktion aus der Entschwerungskolonne; ein erster Rücklauftank zum Kondensieren der Kopfproduktfraktion aus der Entschwerungskolonne und Durchführen einer Gas-Flüssig-Trennung der kondensierten Kopfproduktfraktion aus der Entschwerungskolonne, wobei eine flüssige Phase, die hauptsächlich C$_3$ und C$_4$ enthält, und eine gasförmige Phase, die hauptsächlich C$_3$ enthält, erhalten werden; ein zweiter Kompressor zur Sekundärkompression der gasförmigen Phase, die hauptsächlich C$_3$ enthält, wobei eine gasförmige Phase, die hauptsächlich C$_3$ bei einem Druck von 1,4±0,3 MPa enthält, erhalten wird; ein zweiter Rücklauftank zum Kondensieren der gasförmigen Phase, die hauptsächlich C$_3$ bei einem Druck von 1,4±0,3 MPa enthält, wobei eine flüssige Phase, die hauptsächlich C$_3$ enthält, und eine gasförmige Phase, die hauptsächlich C$_3$ enthält, erhalten werden; eine Absorptionskolonne zur Verwendung von Rohbenzin aus der katalytischen Fraktionierungseinheit zur Absorption von C$_3$- und C$_4$-Komponenten in der Gasphase, die hauptsächlich C$_3$ enthält, zur Bildung eines reichhaltigen Absorptionsöls, wobei die nicht absorbierten Komponenten, d. h. Trockengase, aus dem Kopf der Absorptionskolonne abgezogen werden; und eine Stabilisierungskolonne zum Stabilisieren von Materialien aus dem Boden der Entschwerungskolonne und des reichhaltigen Absorptionsöls aus dem Boden der Absorptionskolonne, wobei eine verflüssigte Gasfraktion aus dem Kopf der Stabilisierungskolonne erzeugt wird und eine Benzinfraktion aus dem Boden der Stabilisierungskolonne erzeugt wird.

14. Absorptions-Stabilisierungssystem nach Anspruch 13, weiterhin umfassend:

einen Festbettreaktor zur Umsetzung von Olefinen im Trockengas aus der Absorptionskolonne, um Olefine zu erhalten, die hauptsächlich C$_4$ bis C$_8$ enthalten und einem ersten Wirbelschichtreaktor zugeführt werden; einen ersten Wirbelschichtreaktor zum Cracken von Olefinen, die hauptsächlich C$_4$ bis C$_8$ aus dem Festbettreaktor enthalten, aus dem Festbettreaktor und Benzinfraktion aus dem Boden der Stabilisierungskolonne, um gecrackte Produkte zu erhalten; und

ein Dreiphasenseparator zur Trennung der gecrackten Produkte, wobei eine Gasphase, die hauptsächlich $C_3$ und $C_4$ enthält, vom Kopf des Dreiphasenseparators abgezogen wird, und die Gasphase mit dem reichhaltigen Gas aus der katalytischen Fraktionierungseinheit zusammengeführt und durch den ersten Kompressor in die Entschwerungskolonne zurückgeführt wird; und, wobei ein ungecracktes Benzin vom Boden des Dreiphasenseparators abgezogen wird.

15. Absorptions-Stabilisierungssystem nach Anspruch 14, weiterhin umfassend:

eine $C_3$-Entfernungskolonne zur Entfernung der $C_3$-Gasphase aus dem verflüssigten Gas vom Kopf des Stabilisierungskolonne, wobei die $C_3$-Gasphase vom Kopf der $C_3$-Entfernungskolonne erzeugt wird und $C_4$-Fraktion, die aus dem Boden der $C_3$-Entfernungskolonne gewonnen wird; und eine $C_2$-Entfernungskolonne, wobei die $C_3$-Gasphase nach der Kondensation zur $C_2$-Entfernungskolonne transportiert wird, und eine $C_2$-Fraktion vom Kopf der $C_2$-Entfernungskolonne abgezogen wird, die mit Trockengas gemischt und in den Festbettreaktor eingebracht wird; und, wobei eine $C_3$-Flüssigphase aus dem Boden der $C_2$-Entfernungskolonne abgezogen wird, d. h. ein Gemisch aus Propan und Propylen.

16. Absorptions-Stabilisierungssystem nach Anspruch 15, wobei die $C_3$-Flüssigphase aus der $C_2$-Entfernungskolonne in zwei Ströme aufgeteilt wird, die jeweils einer Hochdruck-Propylenrektifikationskolonne und einer ersten Niederdruck-Propylenrektifikationskolonne zugeführt werden, oder wobei die $C_3$-Flüssigphase aus der $C_2$-Entfernungskolonne in drei Ströme aufgeteilt wird, die jeweils einer Hochdruck-Propylenrektifikationskolonne, einer ersten Niederdruck-Propylenrektifikationskolonne und einer zweiten Niederdruck-Propylenrektifikationskolonne zugeführt werden, wobei die Produkte des Rektifikationsvorgangs jeder Kolonne hochreines Propan und Propylen sind; wobei die Hochdruck-Propylenrektifikationskolonne und die erste Niederdruck-Propylenrektifikationkolonne vorzugsweise thermisch gekoppelt sind, d. h., das Ölgas vom Kopf der Hochdruck-Propylenrektifikationskolonne dient als Wärmequelle für einen Wiederkocher am Boden der ersten Niederdruck-Propylenrektifikationskolonne; und das Ölgas vom Kopf der ersten Niederdruck-Propylenrektifikationskolonne dient als Wärmequelle für einen weiteren Wiederkocher am Boden der zweiten Niederdruck-Propylenrektifikationskolonne.

17. Absorptions-Stabilisierungssystem nach Anspruch 15 oder 16, wobei das Absorptions-Stabilisierungssystem ferner umfasst:

eine $C_4$-Reformierungseinheit, umfassend einen Vorbehandlungsreaktor und eine katalytische Rektifikationskolonne zum Verarbeiten der $C_4$-Fraktion aus dem Boden der $C_3$-Entfernungskolonne; wobei die $C_4$-Fraktion aus dem Boden der $C_3$-Entfernungskolonne nacheinander durch den Vorbehandlungsreaktor und die katalytische Rektifikationskolonne verarbeitet wird, wobei Butan aus dem Kopf der katalytischen Rektifikationskolonne erzeugt wird und Buten-Reformierungsprodukte aus dem Boden der katalytischen Rektifikationskolonne erzeugt werden; und

ein zweiter Wirbelschichtreaktor zum weiteren Cracken der Buten-Reformationsprodukte in eine Gasphase, die hauptsächlich $C_3$ und $C_4$ enthält, wobei die Gasphase, die hauptsächlich $C_3$ und $C_4$ enthält, zur Entschwerungskolonne zurückgeführt wird.

**Revendications**

1. Procédé nouveau d'une unité d'absorption-stabilisation, comprenant les étapes suivantes :

S1 effectuer une compression primaire d'un gaz riche : compresser du gaz riche provenant d'une unité de fractionnement catalytique par un premier compresseur à une pression de 0,6 ± 0,2 MPa, dans lequel le gaz riche comprimé est directement introduit dans une tour de destillation pour séparation par rectification ; condenser de la fraction de tête de la tour de destillation au sommet de la tour de destillation et soumission de celle-ci à une séparation gaz-liquide à l'intérieur d'un premier réservoir de reflux, obtenant une phase liquide contenant principalement du $C_3$ et du $C_4$, et une phase gazeuse contenant principalement du $C_3$, dans lequel la phase liquide contenant principalement du C3C4 est partiellement renvoyée au reflux et partiellement déchargée vers un parc de réservoirs ou une tour d'élimination de C3 ;
S2 effectuer une compression secondaire du gaz riche : introduire la phase gazeuse contenant principalement du $C_3$ depuis le sommet du premier réservoir de reflux jusqu'à une entrée d'un second compresseur, où elle est comprimée à 1,4 ± 0,3 MPa par un second compresseur ;

après la compression secondaire, condenser la phase gazeuse et la soumettre à une séparation gaz-liquide à l'intérieur d'un second réservoir de reflux, la phase liquide séparée étant déchargée jusqu'à une tour d'élimination de $C_3$, et la phase gazeuse étant envoyée jusqu'au fond d'une tour d'absorption ;

S3 effectuer une absorption de gaz secs : injecter de l'essence brute provenant de l'unité de fractionnement catalytique dans le sommet de la tour d'absorption, dans lequel l'essence brute est mise en contact avec les matériaux en phase gazeuse provenant du fond de la tour d'absorption, et dans lequel l'essence brute absorbe les composants $C_3$ et $C_4$ des matériaux en phase gazeuse pour former une huile d'absorption riche, tandis que les composants non absorbés, c'est-à-dire les gaz secs, sont soutirés du sommet de la tour d'absorption ;

S4 effectuer une stabilisation d'essence : alimenter des matériaux à partir du fond de la tour de destillation et de l'huile d'absorption riche à partir du fond de la tour d'absorption respectivement dans une tour de stabilisation, dans lequel une fraction de gaz liquéfié est soutirée à partir du sommet de la tour de stabilisation, et une fraction d'essence est soutirée à partir du fond de la tour de stabilisation.

2. Procédé nouveau d'une unité d'absorption-stabilisation selon la revendication 1, dans lequel une pression de fonctionnement de la tour de destillation est de 0,6 ± 0,2 MPa, une température au fond de la tour est comprise entre 60 et 180 °C, et une température au sommet de la tour est comprise entre 40 et 70 °C.

3. Procédé d'utilisation globale de produits provenant d'une unité d'absorption-stabilisation , dans lequel le procédé comprend les étapes de l'une quelconque des revendications 1 et 2, et le procédé comprend en outre les étapes suivantes :

S3-1 : transporter des gaz secs avec une teneur élevée en éthylène depuis le sommet de la tour d'absorption séquentiellement vers un échangeur de chaleur et un four de chauffage pour chauffer, et puis introduction des gaz secs dans un réacteur à lit fixe, dans lequel les oléfines dans les gaz secs sont converties en oléfines contenant principalement $C_4$ à $C_8$ à l'intérieur du réacteur à lit fixe, et tous les produits oléfiniques sont introduits dans un premier réacteur à lit fluidisé ;

S4-1 : pomper de la fraction d'essence du fond de la tour de stabilisation vers le premier réacteur à lit fluidisé, dans lequel les oléfines dans la fraction d'essence et les produits oléfiniques provenant de l'étape S3-1 sont craqués à l'intérieur du premier réacteur à lit fluidisé ; les produits craqués sont refroidis par échange de chaleur avant d'être introduits dans un séparateur à trois phases ; les composants de phase gazeuse contenant principalement du $C_3$ et du $C_4$ sont soutirés du sommet du séparateur à trois phases et fusionnés avec le gaz riche provenant de l'unité de fractionnement catalytique, puis renvoyés vers la tour de destillation à travers le premier compresseur ; une essence non craquée est soutirée du fond du séparateur à trois phases, et l'essence non craquée est rectifiée et ensuite déchargée vers un parc de réservoirs, dans lequel les composés aromatiques sont en outre purifiés par un procédé d'extraction par solvant pour obtenir des monomères tels que benzène, toluène et xylène ;

S4-2 : pomper le gaz liquéfié depuis le sommet de la tour de stabilisation dans la tour d'élimination de $C_3$, dans lequel la phase gazeuse de $C_3$ est soutirée depuis le sommet et la fraction de $C_4$ est soutirée depuis le fond de la tour d'élimination de $C_3$ ; la phase gazeuse de $C_3$ est pompée dans une tour d'élimination de $C_2$ après avoir été condensée, dans lequel la fraction de $C_2$ est soutirée depuis le sommet de la tour d'élimination de $C_2$, mélangée avec le gaz sec, puis introduite dans le réacteur à lit fixe de l'étape S3-1 ; une phase liquide de $C_3$, à savoir un mélange de propane et de propylène, est soutirée depuis le fond de la tour d'élimination de $C_2$ ;

la phase liquide de C3 est divisée en deux courants, dans lequel un courant est introduit dans une tour de rectification de propylène haute pression et l'autre courant est introduit dans une première tour de rectification de propylène basse pression, ou, la phase liquide de C3 est divisée en trois courants introduits respectivement dans une tour de rectification de propylène haute pression, une première tour de rectification de propylène basse pression, et une seconde tour de rectification de propylène basse pression, les produits de l'opération de rectification de chaque tour étant du propane et du propylène de haute pureté ;

S4-3 : pomper de la fraction de $C_4$ à partir du fond de la tour d'élimination de $C_3$ dans une unité de reformage de $C_4$, qui est équipée d'un réacteur de prétraitement et d'une tour de rectification catalytique ; après que le mélange de $C_4$ a été traité séquentiellement à travers le réacteur de prétraitement et la tour de rectification catalytique, du butane est soutiré du sommet de la tour de rectification catalytique, et des produits de reformage de butène sont produits à partir du fond de la tour de rectification catalytique, dans lequel les produits de reformage de butène sont ensuite envoyés à un second réacteur à lit fluidisé pour un craquage supplémentaire en composants en phase gazeuse contenant principalement du $C_3$ et du $C_4$, et les composants en phase gazeuse sont également fusionnés avec le gaz riche provenant de l'unité de fractionnement catalytique et renvoyés à la tour de destillation à travers le premier compresseur.

4. Procédé d'utilisation globale selon la revendication 3, dans lequel une température de réaction du réacteur à lit fixe est comprise entre 300°C et 500°C, une pression de réaction est comprise entre 0,3 et 3,0 MPa, et une vitesse spatiale est comprise entre 0,1 et 10 h$^{-1}$ .

5. Procédé d'utilisation globale selon la revendication 3, dans lequel la réaction dans le réacteur à lit fixe se produit dans des conditions de phase gazeuse avec un taux de conversion d'oléfine supérieur à 85 m%.

6. Procédé d'utilisation globale selon la revendication 3, dans lequel la température de réaction du premier réacteur à lit fluidisé est comprise entre 350°C et 650°C, la pression de réaction est comprise entre 0,05 et 1,0 MPa, et une vitesse spatiale est comprise entre 1 et 30 h$^{-1}$.

7. Procédé d'utilisation globale selon la revendication 3, dans lequel la température de réaction du deuxième réacteur à lit fluidisé est comprise entre 300°C et 550°C, la pression de réaction est comprise entre 0,01 et 1,0 MPa, et la vitesse spatiale est comprise entre 10 et 50 h$^{-1}$.

8. Procédé d'utilisation global selon la revendication 3, dans lequel la température au sommet de la tour de rectification de propylène à haute pression est de 3°C à 15°C supérieure à la température au fond de la première tour de rectification de propylène à basse pression ; et la température au sommet de la première tour de rectification de propylène à basse pression est de 3°C à 15°C supérieure à la température au fond de la seconde tour de rectification de propylène à basse pression.

9. Procédé d'utilisation globale selon la revendication 3, dans lequel un rapport d'un débit d'alimentation de la phase liquide en C$_3$ à la tour de rectification de propylène haute pression et d'un débit d'alimentation de la phase liquide en C$_3$ à la tour de rectification de propylène basse pression est compris entre 0,5:1 et 2,0:1.

10. Procédé d'utilisation globale selon la revendication 3, dans lequel la tour de rectification de propylène à haute pression et la tour de rectification de propylène à basse pression sont couplées thermiquement, c'est-à-dire que le gaz de pétrole provenant du sommet de la tour de rectification de propylène à haute pression sert de source de chaleur pour un rebouilleur au fond de la première tour de rectification de propylène à basse pression ; et le gaz de pétrole provenant du sommet de la première tour de rectification de propylène à basse pression sert de source de chaleur pour un autre rebouilleur au fond de la seconde tour de rectification de propylène à basse pression.

11. Procédé d'utilisation globale selon la revendication 3, dans lequel la température de réaction de l'unité de reformage en C$_4$ est comprise entre 3°C et 300°C, la pression de réaction est comprise entre 0,05 et 6,0 MPa, et une vitesse spatiale est comprise entre 0,1 et 10 h$^{-1}$ .

12. Procédé d'utilisation complète selon la revendication 3, dans lequel la réaction dans l'unité de reformage en C$_4$ se produit dans des conditions de phase liquide avec un taux de conversion d'oléfine supérieur à 90 m%.

13. Système d'absorption-stabilisation, comprenant :

un premier compresseur pour une compression primaire d'un gaz riche provenant d'une unité de fractionnement catalytique, obtenant un gaz riche à une pression de 0,6 ± 0,2 MPa ;
une tour de distillation pour séparation par rectification du gaz riche à la pression de 0,6 ± 0,2 MPa, obtenant une fraction de tête de la tour de distillation ;
un premier réservoir de reflux pour condenser la fraction de tête provenant de la tour de distillation et effectuer une séparation gaz-liquide sur la fraction de tête condensée provenant de la tour de distillation, obtenant une phase liquide contenant principalement du C$_3$ et du C$_4$ et une phase gazeuse contenant principalement du C$_3$ ;
un second compresseur pour une compression secondaire de la phase gazeuse contenant principalement du C$_3$, obtenant une phase gazeuse contenant principalement du C$_3$ à une pression de 1,4 ± 0,3 MPa ;
un second réservoir de reflux pour condensation de la phase gazeuse contenant principalement du C$_3$ à une pression de 1,4 ± 0,3 MPa, obtenant une phase liquide contenant principalement du C$_3$ et une phase gazeuse contenant principalement du C$_3$ ;
une tour d'absorption pour utiliser de l'essence brute provenant de l'unité de fractionnement catalytique pour absorber des composants en C$_3$ et en C$_4$ dans la phase gazeuse contenant principalement du C$_3$, formant une huile d'absorption riche, avec les composants non absorbés, c'est-à-dire des gaz secs, étant extraits de la partie supérieure de la tour d'absorption ; et
une tour de stabilisation pour stabiliser des matériaux à partir du fond de la tour de distillation et l'huile d'absorption riche à partir du fond de la tour d'absorption, avec une fraction de gaz liquéfié étant produite à partir du sommet de la tour de stabilisation et une fraction d'essence étant produite à partir du fond de la tour de stabilisation.

14. Système d'absorption-stabilisation selon la revendication 13, comprenant en outre :

un réacteur à lit fixe pour faire réagir des oléfines dans le gaz sec provenant de la tour d'absorption pour obtenir des oléfines contenant principalement du $C_4$ au $C_8$, qui sont envoyées à un premier réacteur à lit fluidisé ;
un premier réacteur à lit fluidisé pour craquer des oléfines contenant principalement du $C_4$ au $C_8$ provenant du réacteur à lit fixe et une fraction d'essence provenant du fond de la tour de stabilisation pour obtenir des produits craqués ; et
un séparateur à trois phases pour séparer les produits craqués, dans lequel une phase gazeuse contenant principalement du $C_3$ et du $C_4$ est soutirée du sommet du séparateur à trois phases, et la phase gazeuse est fusionnée avec le gaz riche provenant de l'unité de fractionnement catalytique et renvoyée à la tour de distillation à travers du premier compresseur ; et, dans lequel une essence non craquée est soutirée du fond du séparateur à trois phases.

15. Système d'absorption-stabilisation selon la revendication 14, comprenant en outre :

une tour d'élimination de $C_3$ pour éliminer la phase gazeuse de $C_3$ du gaz liquéfié depuis le sommet de la tour de stabilisation, la phase gazeuse de $C_3$ étant produite depuis le sommet de la tour d'élimination de $C_3$ et une fraction de $C_4$ étant produite depuis le fond de la tour d'élimination de $C_3$ ; et
une tour d'élimination de $C_2$, dans laquelle la phase gazeuse de $C_3$ est transportée vers la tour d'élimination de $C_2$ après avoir été condensée, et une fraction de $C_2$ est soutirée du sommet de la tour d'élimination de $C_2$, qui est mélangée avec du gaz sec et introduite dans le réacteur à lit fixe ; et, dans laquelle une phase liquide de $C_3$ est soutirée du fond de la tour d'élimination de $C_2$, c'est-à-dire, un mélange de propane et de propylène.

16. Système d'absorption-stabilisation selon la revendication 15, dans lequel la phase liquide en $C_3$ provenant de la tour d'élimination de $C_2$ est divisée en deux flux alimentés respectivement à une tour de rectification de propylène haute pression et à une première tour de rectification de propylène basse pression, ou bien la phase liquide en $C_3$ provenant de la tour d'élimination de $C_2$ est divisée en trois flux alimentés respectivement à une tour de rectification de propylène haute pression, à une première tour de rectification de propylène basse pression et à une seconde tour de rectification de propylène basse pression, les produits de l'opération de rectification de chaque tour étant du propane et du propylène de haute pureté ;
de préférence, la tour de rectification de propylène haute pression et la première tour de rectification de propylène basse pression sont couplées thermiquement, c'est-à-dire que le gaz de pétrole provenant du sommet de la tour de rectification de propylène haute pression sert de source de chaleur pour un rebouilleur au fond de la première tour de rectification de propylène basse pression ; et le gaz de pétrole provenant du sommet de la première tour de rectification de propylène basse pression sert de source de chaleur pour un autre rebouilleur au fond de la seconde tour de rectification de propylène basse pression.

17. Système d'absorption-stabilisation selon les revendications 15 ou 16, dans lequel le système d'absorption-stabilisation comprend en outre :

une unité de reformage en $C_4$ comprenant un réacteur de prétraitement et une tour de rectification catalytique pour traiter la fraction de $C_4$ provenant du fond de la tour d'élimination de $C_3$ ; la fraction de $C_4$ provenant du fond de la tour d'élimination de $C_3$ est traitée séquentiellement à travers le réacteur de prétraitement et la tour de rectification catalytique, avec du butane étant produit à partir du sommet de la tour de rectification catalytique et des produits de reformage de butène étant produits à partir du fond de la tour de rectification catalytique ; et
un deuxième réacteur à lit fluidisé pour craquer davantage les produits de reformage de butène en une phase gazeuse contenant principalement du $C_3$ et du $C_4$, dans lequel la phase gazeuse contenant principalement du $C_3$ et du $C_4$ est renvoyée à la tour de distillation.

Fig. 1

T3 Overhead Dry Gas

T5 Overhead C2 Fraction

C3+C4    T1

F1

Gasoline
tank farm

Aromatics
Purification

T2 Tower Bottom Gasoline

## Fig. 2

C2 Fraction
Heating furnace

G4

P7

T2 Overhead
Liquefied Gas

T4

C3 Fraction

T5

C3

T6

G5

P8

T1 Overhead
C3 and C4
Fraction

C4 Fraction
R4

G6

P9

T7

Propylene
tank farm

Propane
tank farm

## Fig. 3

Fig. 4

**EP 4 394 018 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 107227172 B
- US 2017321132 A1
- CA 645372 A